# EUROPEAN PATENT APPLICATION

(11) **EP 2 574 749 A1**
(43) Date of publication of application: **03.04.2013**
(21) Application number: 12173870.2
(22) Date of filing: 27.06.2012
(51) Int. Cl.: F01N 3/20

(54) **SCR fluid distribution and circulation system**

(30) Priority: 29.06.2011 US 201161502470 P; 20.06.2012 US 201213528537
(71) Applicant: TI Group Automotive Systems, L.L.C., Auburn Hills, MI 48326 (US)
(72) Inventor: Crary, Lynwood, F., Preston, 06365, CT Connecticut (US)
(74) Representative: von Kreisler Selting Werner

(57) **Abstract**

A selective catalytic reduction system includes a fluid distribution system for supplying an exhaust gas reducing agent. The system includes a liquid storage tank (14) and a fluid distribution module (16) with a fluid pump (30) that draws liquid reducing agent from the tank volume (28) and provides the liquid at a module outlet port, while simultaneously discharging excess liquid from a circulation line outlet (52) within the tank volume (28). The circulation line outlet (52) can be located at a bottom portion of the tank volume (28) near other distribution module components to promote liquid circulation around the module components during a fluid distribution period, to promote thawing of frozen reducing agent at and around the module components, and to ensure a continuous supply of liquid to the fluid pump (30). The distribution module (16) is also capable of purging liquid from fluid lines located outside the storage tank and returning the purged liquid to the tank volume (28).

## Description

This application claims the benefit of U.S. Provisional Application No. 61/502,470, filed June 29, 2011, which is incorporated herein by reference in its entirety.

### Technical Field

The present disclosure relates generally to the distribution of fluids in a selective catalytic reduction system.

### Background

Selective catalytic reduction (SCR) is a technique that may be used to treat exhaust gases from combustion-type power plants such as internal combustion engines or other fuel burning devices to remove certain types of pollutants from the exhaust gas stream by converting them to other potentially less harmful compounds. For example, in one version of SCR, a reducing agent may be introduced into the exhaust gas stream in the presence of a catalyst to remove NOₓ compounds from the exhaust gases and replace them with gases such as water vapor, nitrogen, and/or carbon dioxide. Some examples of reducing agents for NOₓ compounds include ammonia, certain ammonium compounds, or urea. Urea may be favored in certain applications because it is non-toxic and relatively safe to store and transport.

SCR systems that are located on-board vehicles or other mobile equipment may include a storage tank for storing the reducing agent and a distribution system that distributes the reducing agent to the exhaust gas stream. Where urea is used as the reducing agent, it may be dissolved in water at a desired concentration for practical use and stored in the storage tank. But even when present at a concentration that minimizes the freezing point of the urea solution, the freezing point of the liquid is still within typical cold weather temperature ranges in many parts of the world. Even with SCR systems that include means for heating the urea solution, heating sources are often limited to localized areas of the system and may not be able to heat the entire distribution system effectively.

### Summary

In one implementation, a fluid distribution module for use with a liquid storage tank includes a fluid pump having a pump inlet and a pump outlet. The pump inlet is configured to receive liquid from a bottom portion of an inner tank volume of the liquid storage tank, and the pump outlet is fluidly connected to a module outlet port. The distribution module also includes a circulation line having an outlet for discharging fluid from the distribution module and into the tank volume. The circulation line outlet is located at the bottom portion of the tank volume and is fluidly connected to one of the pump outlet or a module inlet port. The distribution module also includes a circulation valve operable to prevent fluid flow from the tank volume to the circulation line, and the distribution module is attached to the storage tank at a module opening formed in the storage tank.

In another implementation, a fluid pump assembly for use with a fluid distribution module includes a fluid pump and a valve manifold. The fluid pump has a pump inlet and a pump outlet, and the valve manifold has a manifold housing attached to the fluid pump so that the pump inlet and outlet are covered by the manifold housing. The fluid pump assembly also includes an inlet line, a purge line, an inlet valve, and a purge valve. The inlet line and the purge line are formed in the manifold housing and fluidly connected with each other and with the pump inlet. The inlet valve is operable to prevent fluid flow from the pump inlet through the inlet line. The purge valve is operable to prevent fluid flow to the pump inlet from the purge line. At least one of the valves is in physical contact with the manifold housing.

In another implementation a method of purging an SCR system includes the steps of: (a) pumping reducing agent from an inner tank volume of a liquid storage tank through a device supply line and toward a device that uses at least some of the reducing agent, the device supply line being located at least partly outside the storage tank; (b) pumping excess reducing agent into the inner tank volume during step (a) through a circulation line fluidly connected to the device supply line; (c) subsequently pumping reducing agent from the device supply line to the inner volume of the storage tank through an outlet immersed in reducing agent; and (d) causing a purge gas to flow through the device supply line in the same direction as the reducing agent during step (c).

### Brief Description of the Drawings

FIG. 1 is a schematic of an SCR system, including a single-line fluid distribution system, according to one embodiment;

FIG. 2 is a schematic of an SCR system, including a dual-line fluid distribution system;

FIG. 3 is a schematic of an SCR system, including a dual-line fluid distribution system;

FIG. 4 is an exploded view of an illustrative single-line fluid distribution module;

FIG. 5 is a top perspective view of an illustrative dual-line fluid distribution module;

FIG. 6 is an exploded view of the distribution module of FIG. 5; and

FIG. 7 is an illustrative fluid distribution system, including the distribution module of FIG. 5 mounted at the bottom of a liquid storage tank.

### Detailed Description of Presently Preferred Embodiments

One method of managing problems associated with the freezing of urea solutions in SCR systems is purging the fluid from portions of the system and returning it to the fluid storage tank prior to shutting the system down. Purging the system may cause any liquid that freezes to be contained in the storage tank so that any heating required to melt the frozen material can be directed to a known location.

Some distribution systems may deliver liquid in amounts in excess of the amount needed by the device that uses it. Excess liquid may be returned to the storage tank in various ways and/or in various locations. Any excess that is returned to the storage tank at a location above the liquid level before frozen tank contents are completely liquefied may rest on top of the solid material and not make its way to a bottom-mounted fluid pump, thus potentially starving the pump and preventing the distribution system from working in at least some systems. This can also halt the circulation of the liquid within the tank volume, further slowing the melting process.

To help with this problem, any excess fluid in the distribution system may be returned to the storage tank near the bottom of the tank volume so that the circulated liquid can help melt more of the solid tank contents and the fluid pump maintains a continuous supply of fluid to distribute. However, one problem with returning excess fluid to a bottom portion of the tank volume may occur during the next purge period before system shutdown. The line or port located at the bottom portion of the tank volume through which excess liquid is returned to the storage tank may be below the liquid level - i.e., immersed in the stored liquid. The return line or port, being connected at least indirectly to the fluid pump outlet, may draw fluid out of the storage tank when the fluid pump is operated in reverse for the purge period, thereby defeating the purge by refilling the lines of the distribution system.

Some of the structures and methods described below may be useful to distribute a fluid or fluids from a liquid storage tank to one or more distribution points of a fluid distribution system and to purge the fluid distribution system in a way that may improve fluid management in the storage tank over other known structures and methods. The disclosed arrangements and methods of operation of fluid distribution system components may be particularly useful with fluids having a freezing point that is within normal atmospheric temperatures in some areas or some seasons. For instance, excess fluid in a fluid distribution system may be returned to the storage tank at a location that is below the liquid level in the tank while avoiding refill of the system lines during the purge period.

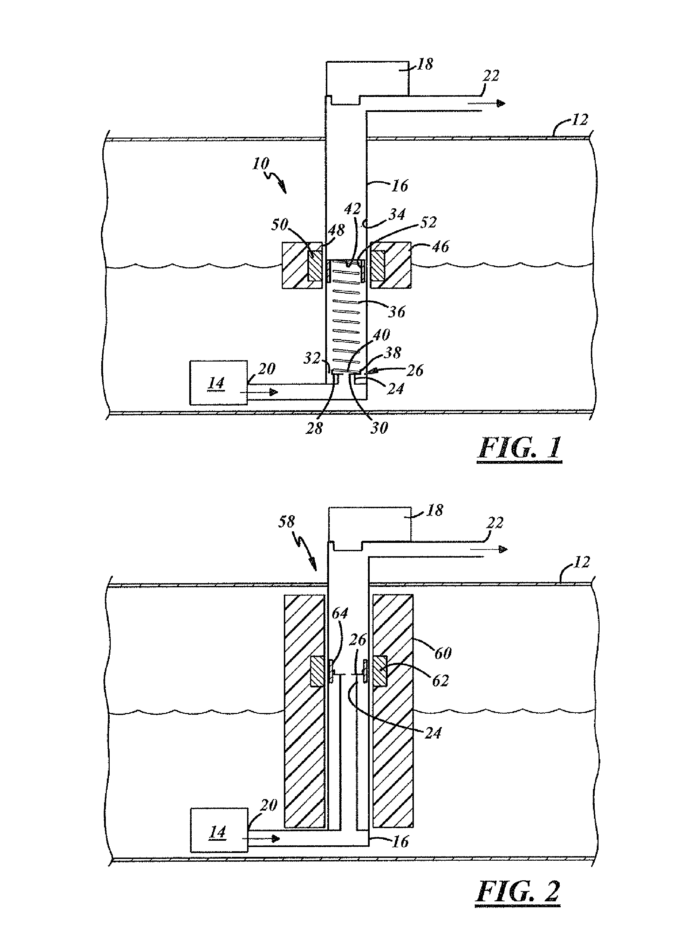

Referring now to the figures, it is noted that the schematics of FIGS. 1-3 are not meant to indicate actual component sizes or locations in the system. Rather, they are meant only as examples of SCR or fluid distribution systems that indicate how the different system components may be arranged relative to one another and how these arrangements may operate. Some examples of individual system components are discussed in further detail in conjunction with other figures. Additionally, these and other embodiments of fluid distribution systems that can deliver fluid to one or more desired distribution points are not limited to SCR systems, as other fluid delivery systems may find these teachings advantageous.

FIG. 1 is a schematic of an SCR system 10 including a fluid distribution system 12 according to one embodiment. The distribution system 12 includes a liquid storage tank 14 and a fluid distribution module 16. The distribution module 16 may be attached to the storage tank 14 at a module opening (not shown) formed in one or more walls of the storage tank 14, and at least a portion of the distribution module 16 may extend through the module opening. The distribution module 16 may be manufactured as a single, multi-component assembly to be easily installed in or over the module opening of the tank.

The SCR system 10 may also include a device 18, in this case a liquid injector, and a device supply line 20 that connects the distribution system 12 to the injector 18. In the example shown, a liquid fluid 22 may be delivered from the storage tank 14 to the injector 18 for providing doses of a reducing agent to an exhaust gas stream 24 flowing through an exhaust conduit 26, from a combustion engine for example. One example of a reducing agent for use in the SCR system 10 is urea, though other compounds, such as other nitrogen-containing compounds, may be used. The urea may be in the form of an aqueous solution at any desired concentration, such as a concentration that minimizes the freezing point of the solution. Though the actual reducing agent that can remove NOₓ compounds from the exhaust gas stream 24 may be a by-product of urea decomposition, the term "reducing agent" as used herein generally refers to the liquid (or in some cases frozen) solution.

As shown, at least a portion of the fluid distribution module 16 may be within an inner tank volume 28 of the storage tank 14, while other portions may be outside the tank volume. The distribution module 16 in this embodiment includes a fluid pump 30, an inlet line 32, an outlet line 34, a circulation line 36, and a purge line 38. As used herein, the term "line" is not limited to a traditional tubular conduit, but broadly refers to a component of the system through which fluid flows. For example, a line may be a hard connection between two ports through which a fluid may pass, a valve or valve body, a channel or hollow area in a component through which fluid may pass, etc. The fluid distribution module 16 in this example also includes an inlet valve 40, a circulation valve 42, and a purge valve 44. Valves 40-44 in this example are check valves that allow fluid flow in only one direction and are actuated by pressure differentials. The inlet valve 40 is operable to allow fluid flow from the tank volume 28 to the inlet line 32 and to prevent fluid flow from the inlet line to the tank volume. The circulation valve 42 is operable to allow fluid flow from the circulation line 36 to the tank volume 28 and to prevent fluid flow from the tank volume to the circulation line. The purge valve 44 is operable to allow fluid flow from the purge line 38 to the tank volume 28 and to prevent fluid flow from the tank volume to the purge line 38.

During a distribution period, when it is desired to deliver the liquid fluid 22 to the device 18, the pump 30 is energized to draw the fluid 22 into a pump inlet 46 and discharge fluid from a pump outlet 48. The pump inlet 46 is configured to receive liquid from a bottom portion of the storage tank volume 28, defined as the volumetric lower half of the storage tank volume or the portion of the tank volume occupied by liquid with the storage tank is half full. The fluid 22 flows into the inlet line 32, through the inlet valve 40, into the fluid pump 30 through the pump inlet 46, out of the fluid pump through the pump outlet 48, and into the outlet line 34 and the circulation line 36, where the fluid may be pressurized. An optional pressure transducer 50 may be used to monitor line pressure and/or provide feedback to a control system. The circulation valve 42 may be configured to open or allow flow therethrough at a particular pressure to allow fluid to be discharged from the module 16 and into the tank volume 28 at a circulation line outlet 52. The outlet 52 may be located at the bottom portion of the tank volume 28. This arrangement may be useful to provide a jet of liquid, for example through an orifice smaller than the other fluid lines, that can be directed to melt frozen material in known difficult to thaw areas or to help circulate fluid in the general area of the fluid pump 30 or in some other area of the tank volume 28. An optional distribution tube 54 can help more evenly distribute the fluid discharged from the circulation line 36.

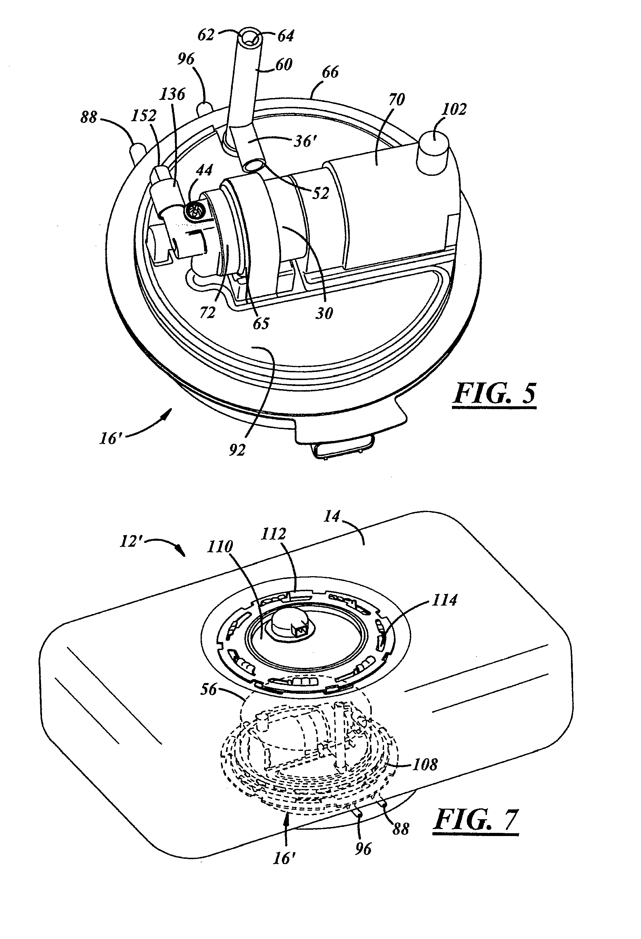

Other types of flow diverters (not shown in FIG. 1) may also be used to direct fluid expelled from the circulation line 36 at the circulation line outlet 52. Such flow diverters can help prevent a strong jet of liquid from simply cutting or boring a hole in frozen solution, a situation that can transport fluid to the opposite side of frozen material away from the fluid pump and potentially starve the pump. One type of flow diverter may at least partially surround the portion of module 16 that is located within the storage tank volume 28 to help contain the fluid circulation to a region at or around the location of the fluid distribution module 16 and its components. One example of this type of flow diverter 56 is depicted in FIG. 7 in dashed lines, and may include other features such as slots or other openings that allow fluid flow to the module side of the diverter from the outside of the diverter.

With continued reference to FIG. 1, a purge period may be described. During the purge period, the fluid pump 30 may operate in reverse, drawing fluid into the pump outlet 48 and expelling fluid from the pump inlet 46. In the illustrative system 10 of FIG. 1, the injector 18 may be set to an open position to allow gases from exhaust conduit 26 to replace the displaced liquid fluid that returns to the tank volume 28. During the purge period, the circulation valve 42 is closed to prevent fluid flow from the tank volume 28 to the circulation line. Also, the inlet valve 40 is closed to prevent fluid flow through the inlet line 32. The purge valve 44 is open to allow the fluid to be substantially discharged from the module 16, though some fluid may remain in one or more of the lines or valves. Other valves and lines may of course be included, but the schematic of FIG. 1 shows an example of basic operation of the system 12 including the use of a circulation line 36 arranged to promote liquid fluid movement within the tank volume 28. The SCR system 10 of FIG. 1 may be referred to as a single-line system because a single line connects the fluid distribution system 12 with the device 18.

Referring now to FIG. 2, another implementation of an SCR system 12' is shown. The illustrated SCR system 10' is a dual-line system that includes a return line 58 arranged between the fluid distribution system 12' and the device 18. The return line 58 can return excess liquid fluid supplied to the device 18 via the supply line 20 back to the tank volume 28. In this example, liquid fluid is provided to the circulation line 36 via the return line 58. The fluid distribution module 16' also includes a purge vent line 60 with a vent gas inlet 62 and a vent valve 64. The vent line 60 fluidly connects a purge gas source to the circulation line 36 in this example. The vent valve 64 is operable to allow purge gas to flow from the tank volume 28 (or some other purge gas source) into the vent line 60 and to prevent fluid flow from the purge vent line 60 into the tank volume 28 through the vent gas inlet 62. During a distribution period with this embodiment, liquid fluid 22 is supplied to the device 18 via the supply line 20. Some of the fluid is injected into the exhaust gas stream 24, and excess fluid flows through the return line 58 and is expelled back into the tank volume 28 through the circulation line outlet 52. As with the outlet 52 shown in FIG. 1, the liquid flow from the circulation line outlet may be directed in any desired direction to help with fluid circulation within the tank volume, to reach difficult to melt areas of frozen material, etc.

During a purge period with the embodiment shown in FIG. 2, the fluid pump 30 may be operated in reverse and the injector 18 may be set to a closed position, though an open position may function in some cases. As the pump 30 draws fluid out of the supply line 20 and the return line 58, the circulation valve 42 is closed and the vent valve 64 is open to a purge gas source to allow gases to replace the displaced liquid fluid returned to the tank volume 28. In this case, the purge gas source is an upper portion of tank volume 28, or the airspace above the liquid fluid 22, due to the purge vent line 60 being arranged so that vent gas inlet 62 is positioned at the upper portion of the tank volume. Other purge gas sources are possible, such as the atmosphere or another convenient and/or desirable gas source. This arrangement allows excess fluid flow to be returned to the tank volume 28 at a location in a lower portion of the tank volume - i.e., the circulation line outlet 52 may be immersed in the liquid 22 - without the stored fluid being drawn into the supply line 20 or the return line 58 during the purge period. During the purge period, fluid is discharged from the fluid distribution system 16 and into the tank volume 28 at the same portion of the system as with the single-line system shown in FIG. 1.

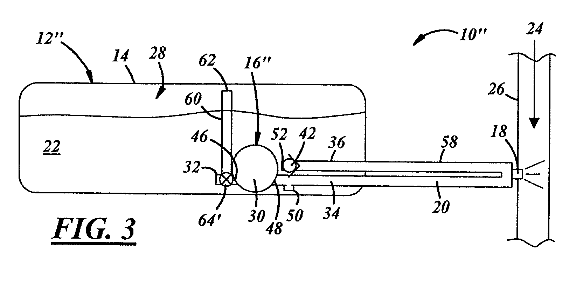

With reference to FIG. 3, another embodiment of a dual-line SCR system 10" is illustrated. This embodiment also includes a purge vent line 60 having a vent gas inlet 62 in fluid connection with the upper portion of tank volume 28 as a purge gas source. In this implementation, the purge vent line 60 fluidly connect the purge gas source to the pump inlet 46 and inlet line 32 via one or more valves that selectively allow(s) fluid flow from the purge gas source to the pump inlet. In this example, the valve is a two-way or three-way vent valve 64', and the fluid distribution module 16" does not include a dedicated purge line or purge valve. The vent valve 64' has a first (or inlet) position and a second (or purge) position. In the first position, the valve 64' allows fluid flow between the inlet line 32 and the pump inlet 46 and closes off the purge vent line 60. In the second position, the valve 64' allows fluid flow between the purge vent line 60 and the pump inlet 46 and closes off the inlet line 32. The valve 64' may be positioned, as shown, at the junction of the inlet line 32 and the purge vent line 60, or along either of the individual lines 32, 60.

During the distribution period, with the valve 64' in the first position, the system 10" operates similarly to system 10' of FIG. 2, drawing fluid through the inlet line 32, into the pump 30, and through lines 34, 20 to the injector 18 with excess fluid returning to the tank volume 28 via the return line 58 and the circulation line 32. In this embodiment, the fluid pump 30 continues to pump fluid in the same direction through the respective lines during the purge period. Rather than change the direction in which the pump pressurizes the fluid, in this example, the valve 64' is changed to the second or purge position. This may be accomplished via an actuator operated by a controller, for example. While the valve 64' may be more complex than the one-way check valves of the other illustrated embodiments, the illustrated fluid distribution system 12" also eliminates several check valves and additional fluid lines. During the purge period, purge gas from the upper portion of the tank volume 28 enters the purge vent line 60 through the vent gas inlet 62 and continues through the pump 30. In this embodiment, the injector 18 may be in a closed position so that the liquid in the supply and return lines 20, 58 is directed to the circulation line outlet 52. In this instance, fluid pump 30 pumps air or some other gas through the system to expel the liquid therefrom.

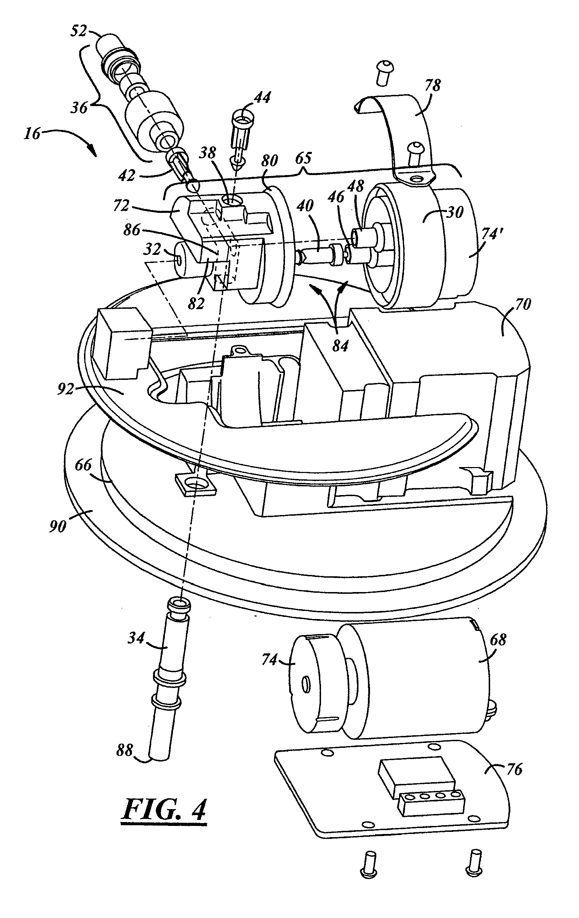

Referring now to FIG. 4, an example of a fluid distribution module 16 is shown in an exploded view. Module 16 combines many of the individual components already described in FIGS. 1-3 into a single component that may be attached to and/or be disposed partially or fully within a liquid storage tank to at least partially define a fluid distribution system or an SCR system. In this embodiment, the fluid distribution module 16 is configured as a bottom-mount module and includes a fluid pump assembly 65 supported by a flange 66. The fluid pump assembly 65 includes the fluid pump 30, which is operated by a motor 68 housed in a housing 70, and a valve manifold 72 attached to the fluid pump 30. The illustrated module 16 includes all of the components necessary to function as part of a fluid distribution system such as that described with reference to FIG. 1.

The fluid pump 30 draws fluid into the pump inlet 46 and expels fluid from the pump outlet 48. The fluid pump 30 may be a positive displacement pump such as a gear pump or gerotor pump, an impeller-type pump, or any other pump that causes fluid to flow into an inlet and out of an outlet. In one embodiment, the pump 30 is a gerotor pump and is capable of reversing the direction of fluid flow when an internal gear is turned in the opposite direction. Various methods of turning the internal gear of the pump may be used, including any of a variety of electric motors coupled therewith. In this embodiment, a DC motor 68 is coupled with the pump 30 via a magnetic coupling. In one embodiment, the motor 68 is a brushless DC motor. Electrical leads have been omitted from FIG. 4 for clarity.

One portion 74 of the magnetic coupling is shown attached to the motor 68, and another portion 74' is shown as a part of the pump 30. When the distribution module 16 is assembled, the motor 68 along with the coupling portion 74 is disposed in the housing 70 of the flange 66 and held in place by a cover 76. The pump 30 may be supported by a formed feature in the flange 66 as shown and attached to the flange using a strap 78 with the coupling portion 74' adjacent the coupling portion 74 and a wall of the housing 70 between the portions 74, 74'. One of the coupling portions includes magnetic material, and the other includes either magnetic or ferromagnetic material so that when the motor turns, the internal gear of the pump turns.

The valve manifold 72 is a component that includes at least one valve operable to alternate between an open position and a closed position when the fluid distribution module alternates between a fluid distribution period and a purge period. The manifold 72 need not be attached to the pump 30, but in this embodiment it includes a manifold housing 80 disposed over the inlet 46 and the outlet 48 of pump, along with valves 40-44. The manifold housing 80 may include an outer surface 82 and one or more fluid lines or channels formed therein. Some of the fluid lines may be fluidly connected with one another by one or more cavities formed within the material thickness of the housing 80, and/or some of the fluid lines may be fluidly connected with one another by a cavity created between an inner surface of the housing 80 (not visible in FIG. 4) and the pump 30. In this particular embodiment, the inlet line 32 and the purge line 38 are formed in the housing 80 and are fluidly connected to the pump inlet 46. More specifically, lines 32 and 38 are fluidly connected to a common inlet cavity 84 that is formed in the space between the inner surface of the manifold housing 80 and the pump 30 when assembled. For example, each of the lines 32, 38 may extend through the thickness of the manifold housing 80 from the outer surface 82 to the inner surface. The inlet valve 40 may be disposed in the inlet line 32 and is operable to prevent fluid flow from the pump inlet 46 through the inlet line. The purge valve 44 may be disposed in the purge line 38 and is operable to prevent fluid flow to the pump inlet from the purge line. In this example, when the manifold 72 is assembled to the pump 30, the formed inlet cavity 84 is fluidly connected to the inlet line 32, the purge line 38, and the pump inlet 42. The location of the inlet cavity 84 is also labeled in the schematic of FIG. 1 for clarity.

A separate outlet cavity 86 may be formed either within the thickness of the manifold housing 80 or between a different portion of the inner surface of the manifold housing 80 and the pump 30. The outlet cavity 86 (shown here as hidden lines) is in fluid connection with the pump outlet 48 and, in this example, is configured for fluid connection to the circulation line 36 and circulation line outlet 52, as well as the outlet line 34 and a module outlet port 88. The circulation valve 42 is disposed in the manifold housing 80 between the circulation line 36 and the outlet cavity 86 and is operable to prevent fluid flow from the outlet 52 to the outlet cavity. Alternatively, the valve 42 could be disposed in the separately attached circulation line 36, which may include multiple individual components as shown. The circulation line outlet 52 is located at an end of the circulation line 36 opposite the end attached to the manifold 72. The individual components of the circulation line 36 may include one or more fittings having orifices with known sizes formed therethrough for predictable fluid flow from the outlet 52.

The outlet line 34 includes the outlet port 88 and is attached to the valve manifold 72. The outline line 34 is in fluid connection with the outlet cavity 86 so that the outlet port 88 is fluidly connected to the pump outlet 48. The outlet line 34 in this implementation extends from one end, attached at the manifold 72 above the flange 66, to an opposite free end below the flange 66 and is configured for connection to a device supply line (such as supply line 20 in FIGS. 1-3) via a quick-disconnect fitting. Additional components may be included with the module 16 and/or attached to the manifold 72, such as the pressure transducer 50 of FIG. 1, which may be attached to the outlet cavity 86 via an additional line or channel formed in the manifold housing 80.

When so constructed, with at least some of the distribution module valves in physical contact with and nearly fully enclosed in the material of the manifold housing 80 in close proximity with one another, the module 16 may be somewhat simpler in construction than it would otherwise be with separate conduit-style fluid lines attached together at multiple locations. Additionally, the manifold housing 80 may be constructed from a thermally conductive material, such as stainless steel, a nickel-based alloy, or some other material that is corrosion-resistant. In one embodiment, the manifold housing 80 is constructed from a thermally conductive polymeric material. The conductive material may facilitate heat transfer from the pump 30, the motor 68 and/or other heat sources such as auxiliary heating elements that may be built-in to the module 16 to help prevent freezing of fluid in the valves. It is also noted that, while many of the valves shown and described as examples for use with the distribution modules disclosed herein are pressure-actuated one-way check valves, any suitable valve may be used in place of any number of the valves shown. Flap valves, solenoid actuated valves, fluid actuated valves, etc. may all be suitable in certain instances.

The flange 66 physically supports many of the other module components, and is configured to cover a module opening formed in a wall of the liquid storage tank. In the illustrated bottom-mount configuration, the flange 66 includes an offset outer edge 90 that may be disposed adjacent the storage tank wall surrounding the tank when installed. The edge 90 may lie just outside a step formed in the flange that may protrude at least partially through the module opening. Some previously mentioned components may be included as part of the flange, such as the housing 70 and the motor cover 76, as well as support features for positioning, holding, and attaching the pump 30. The flange 66 may be constructed from a variety of materials. In one embodiment, it is made from a plastic material, offering excellent corrosion-resistance. In another embodiment, the flange 66 is constructed from a stainless steel material having good corrosion-resistance and being possibly much thinner than a comparable plastic flange with a thermal conductivity that is orders of magnitude higher than some plastic materials. In some applications, the superior thermal conductivity of a metallic material may help to transfer heat from electrically operated components to other components to help keep liquid from freezing in or around them.

A strainer or filter 92 may overlie the top surface of the flange 66, as shown, and may be a thin porous material shaped to fit around various other module components. Fluid passes through the strainer 92 to reach the inlet line 32, and the inlet valve 40 prevents backflow through the strainer during the purge period. The example shown is non-limiting, as almost any suitable porous material may be used to filter particulates or solids from the liquid before it enters the inlet line 32. The particular strainer 92 shown in the figure is designed to have a relatively large surface area and a low profile so that it does not occupy much space in the system.

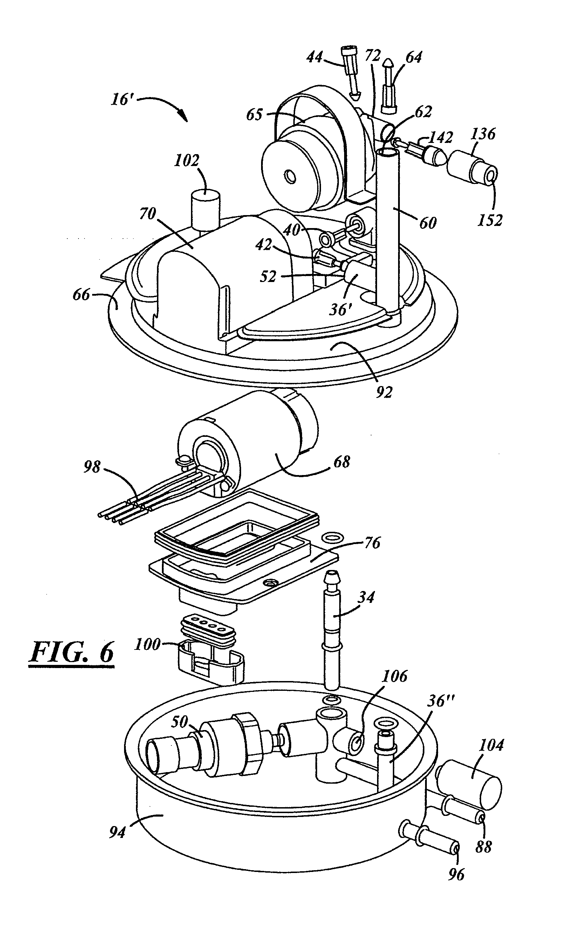

Another embodiment of a fluid distribution module 16' is shown in FIGS. 5 and 6, where FIG. 5 is a top perspective view and FIG. 6 is an exploded view of the module 16'. This embodiment operates similar to the schematic of FIG. 2, in that it is suitable for use as part of a dual-line system, in which excess fluid supplied to the injector or other device via the supply line is returned to the fluid tank volume. This embodiment includes a first circulation line (shown as portions 36' and 36" in FIG. 6) for fluid connection with the return line of the SCR system and a second circulation line 136 in fluid connection with the outlet line 34. The illustrated module 16' includes several components constructed and arranged similar to those shown in FIG. 4, such as the flange 66 and the arrangement of the fluid pump assembly 65 and the motor 68, for example. Additionally shown in FIGS. 5 and 6 is a bottom cover 94 that may provide an internal volume between its inner surface and the bottom surface of the flange 66 where certain module components, such as those described below, can be housed and protected from the reducing agent and from the environment.

Illustrated in the embodiment of FIGS. 5 and 6 is the purge vent line 60, including the vent gas inlet 62, and the vent valve 64 disposed therein. The purge vent line 60 is a vertically oriented tube in this example, extending from an opening in the flange 66. When mounted at the bottom of a liquid storage tank, the fluid distribution module 16' can draw purge gas from the upper portion of the storage tank volume to replace the fluid being drawn out of the supply, return, and/or circulation lines by the fluid pump during the purge period. The purge vent line 60 in this embodiment is integrated with the end segment 36' of the first circulation line, including the circulation line outlet 52 and the circulation valve 42. As previously mentioned, purge gas may come from any number of sources other than the airspace above the liquid in the storage tank during the purge period. For example, the vent gas inlet 62 may be located at the top wall of the tank to receive environmental air through a filtered aperture. The purge vent line 60 is not required to be straight and/or vertical. In another embodiment, pressurized purge air could be introduced at inlet 62 to remove liquid from the fluid lines of the system.

The bottom cover 94 can be used to house components such as the pressure transducer 50 and/or any other component. For example, a heat source such as an electrically powered heater or heating element may be supported or covered by the bottom cover 94 so that the heat source can be near components that may be sensitive to freezing, such as valves or other components. As shown in FIG. 6, several plumbing joints may be located in the internal volume between the bottom cover 94 and the flange 66 where they can be protected from the environment and/or from the reducing agent. The cover 94 may also be a portion of the distribution module 16' that lies outside the tank volume and may provide access to the module outlet port 88, along with access to a module inlet port 96, for respective attachment of the supply line and optional return line that may carry fluid to and return excess fluid from the injector or other device. When the module 16' is assembled with the bottom cover 94 attached under the flange 66, the purge vent line 60 with its integral circulation line end segment 36' is attached to the circulation line segment 36" located in the bottom cover 94 that extends through the cover and includes the inlet port 96.

Also shown in FIG. 6 are electrical leads 98, a connector body 100, a temperature sensor 102, and a solution quality sensor 104. The electrical leads 100 extend from the motor 68. When assembled, the ends of the electrical leads 100 may be housed in the connector body 102 for connection to a power source and/or controller. In this embodiment, the temperature sensor 104 is mounted to the motor housing 70 to monitor the temperature of the surrounding liquid and/or the module 16'. The optional solution quality sensor 104 may be any of a variety of sensors that can measure one or more properties of the fluid in the storage tank, such as a property that correlates to urea concentration, as just one example. Where provided, it may be attached along or adjacent the outlet line 34 along with the pressure transducer 50, such as at an additional sensor port 106, as shown.

As noted above, the fluid distribution module 16' of FIGS. 5 and 6 includes more than one circulation line. As described above, the first circulation line, including segments 36 and 36" in this implementation, is fluidly connected to the purge vent line 60 and configured for fluid connection with the SCR system return line via inlet port 96. The second circulation line 136 includes a second circulation line outlet 152 for discharging fluid from the distribution module and into the tank volume and is fluidly connected to the outlet line 34 via a circulation valve 142, similar to that of FIGS. 1 and 4. Thus, during the distribution period, fluid from each circulation line outlet 52, 152 can be discharged in a different direction or as otherwise desired to help circulate fluid within the storage tank and/or help melt frozen material. In the illustrated embodiment, the first outlet 52 is directed generally toward the center of the module 16' and the pump assembly 65 and motor 68, while the second outlet 152 is directed generally away from the center of the module 16'. The second circulation line 136 and its associated components are optional in a dual-line system, as fluid returned to the tank volume from the return line via the first circulation line may provide sufficient fluid circulation to better manage fluid freezing and thawing. However, the second circulation line 136 may be included, to direct fluid in a different direction than the first circulation line for example, where the fluid pump is sufficiently powerful to pressurize the additional circulation line. In another embodiment, the first circulation line includes more than one outlet 52 to direct fluid in different directions.

An additional feature of the fluid distribution module 16' of FIGS. 5 and 6 is that it is also suitable for use in a single-line SCR system. In other words, even without attachment of a return line at the inlet port 96, the module promotes fluid circulation within the storage tank via the second circulation line 136, and purging the fluid lines is still possible by operating the pump 30 in reverse and setting the injector to an open position. The first circulation valve 42 in that case remains closed to prevent fluid from the tank volume from exiting the tank via the unused inlet port 96.

FIG. 7 is an isometric view of a fluid distribution system 12' that includes the fluid distribution module 16' of FIGS. 5 and 6 installed at the bottom of storage tank 14 and extending partially through a module opening 108. As shown here, the system 12' may further include a top module 110 that may include a flange 112 complimentary in shape with another module opening 114 formed through a tank wall. The top module 110 may include a variety of components and/or serve various functions. For example, it may include a vent valve to relieve pressure from the storage tank, a level sensor, a support for the purge vent line, an opening for the purge vent line to draw air through, a filler pipe, or a filler opening, to name a few examples. It may serve as a service panel to enable access to the tank volume without draining the tank and removing the fluid distribution module 16'. In the embodiment shown, the top module 110 is generally aligned with module 16', but it may be located anywhere.

A method may be described that can be performed with one or more of the above-described or other embodiments. A method of filling and purging fluid lines may include pumping a liquid through a fluid line from a first end to a second end, where both ends are immersed in liquid. For example, with reference to the element numbers used in the previous figures, a fluid pump 30 may perform the step of pumping a liquid through a fluid line. For example a fluid line may comprise a continuous fluid path from the pump inlet 46 to the circulation line outlet 52 of FIG. 2, respectively defining first and second ends of the fluid line, each immersed in the liquid 22. After the fluid line is at least partially filled, the method may further include pumping the liquid through the fluid line in the opposite direction. For example, the pump 30 may be operated in reverse by switching the polarity of the DC current supply to the drive motor. The flow of liquid into the second end of the fluid line may be blocked during the second pumping step. By way of example, during the reverse motor operation, the circulation valve 42 may block flow of liquid into the second end of the line. Additionally, the second end of the fluid line may be vented during the second pumping step to allow gas to replace the liquid being pumped out of the fluid line. Purge vent line 60 may be used to perform this method step.

With further reference to the element numbers used in the figures, one implementation of a method of purging an SCR system 10 includes first at least partially filling one or more fluid lines of the system, then purging the line(s). Filling one or more fluid lines may include the step of pumping reducing agent 22 from the inner tank volume 28 through the device supply line 20 toward the device 18, the supply line being located at least partly outside the storage tank 14. Excess reducing agent 22 is simultaneously pumped into the tank volume 28 through the circulation line 36, which is fluidly connected to the supply line 20. Subsequent to at least partially filling the supply line 20 with reducing agent 22, the method further includes pumping reducing agent 22 from the supply line to the tank volume 28 through an outlet immersed in reducing agent inside the tank. While pumping the reducing agent 22 from the device supply line 20 back to the tank volume 22, purge gas is caused to flow through the supply line in the same direction as the reducing agent.

In at least some implementations, with the SCR systems shown in FIGS. 1 and 2, for example, the purge period includes pumping the reducing agent through the supply line 20 in the opposite direction than during the distribution period, as well as closing the circulation valve 42 to prevent reducing agent from entering the circulation line from the inner tank volume. The immersed outlet in each of FIGS. 1 and 2 is the purge line 38. In the case of the SCR system 10 of FIG. 1, the device 18 remains in an open position during the distribution period and during the purge period, so that purge gas enters the supply line 20 through the device during the purge period. In the case of the SCR system 10" of FIG. 2, which includes the return line 58, the excess reducing agent 22 is pumped through the return line, away from the device 18, during the distribution period, and the device 18 is placed into a closed position during the purge cycle. The vent valve 64 of FIG. 2 is also opened during the purge period to allow the purge gas to flow into and the vent gas inlet 62 and through the return line 58 and the supply line 20. In the case of FIG. 3, the method includes opening the vent valve 64' and pumping the purge gas through the device supply line 20 in the same direction as the reducing agent 22 flows during the distribution period. In this case, the immersed outlet is the circulation line outlet 52.

While the forms of the invention herein disclosed constitute presently preferred embodiments, many others are possible. It is not intended herein to mention all the possible equivalent forms or ramifications of the invention. It is understood that the terms used herein are merely descriptive, rather than limiting, and that various changes may be made without departing from the spirit or scope of the invention.

## Claims

1. A fluid distribution module for use with a liquid storage tank, comprising:
a fluid pump having a pump inlet and a pump outlet, the pump inlet being configured to receive liquid from a bottom portion of an inner tank volume of the liquid storage tank, and the pump outlet being fluidly connected to a module outlet port;
a circulation line having an outlet for discharging fluid from the distribution module and into the tank volume, the circulation line outlet being located at the bottom portion of the tank volume and being fluidly connected to one of the pump outlet or a module inlet port; and
a circulation valve operable to prevent fluid flow from the tank volume to the circulation line, wherein the fluid distribution module is attached to the storage tank at a module opening formed in the storage tank.

2. The fluid distribution module of claim 1, further comprising:
a module inlet port fluidly connected to the circulation line; and
a purge vent line fluidly connecting a purge gas source to the circulation line at a location along the circulation line between the circulation valve and the module inlet port.

3. The fluid distribution module of claim 1, further comprising:
a second circulation line having an second outlet for discharging fluid from the distribution module and into the tank volume, the second circulation line being fluidly connected to the other of the pump outlet or a module inlet port; and
a second circulation valve operable to prevent fluid flow from the tank volume to the second circulation line.

4. The fluid distribution module of claim 3, wherein each of the circulation line outlets discharge fluid from the distribution module in a different direction.

5. The fluid distribution module of claim 1, wherein the circulation line is fluidly connected to the pump outlet.

6. The fluid distribution module of claim 1, further comprising a purge vent line fluidly connecting a purge gas source to the pump inlet via a valve that selectively allows fluid flow from the purge gas source to the pump inlet.

7. The fluid distribution module of claim 1, further comprising a valve manifold attached to the fluid pump, the valve manifold having at least one valve operable to alternate between an open position and a closed position when the fluid distribution system alternates between a fluid distribution period and a purge period.

8. The fluid distribution module of claim 7, wherein the valve manifold comprises:
an inlet valve that opens during the fluid distribution period to allow fluid flow from the tank volume to the pump inlet and closes during the purge period; and
a purge valve that opens during the purge period to allow fluid flow from the pump inlet to the tank volume and closes during the distribution period.

9. The fluid distribution module of claim 8, further comprising:
an outlet cavity formed in the manifold housing and fluidly connected to the pump outlet, the outlet cavity being configured for fluid connection to an outlet port of the fluid distribution module.

10. The fluid distribution module of claim 9, wherein the outlet cavity is configured for fluid connection to a circulation line outlet.

11. A method of purging an SCR system, comprising the steps of:
(a) pumping reducing agent from an inner tank volume of a liquid storage tank through a device supply line and toward a device that uses at least some of the reducing agent, the device supply line being located at least partly outside the storage tank;
(b) pumping excess reducing agent into the inner tank volume during step (a) through a circulation line fluidly connected to the device supply line;
(c) subsequently pumping reducing agent from the device supply line to the inner volume of the storage tank through an outlet immersed in reducing agent; and
(d) causing a purge gas to flow through the device supply line in the same direction as the reducing agent during step (c).

12. The method of claim 11, wherein step (c) comprises:
pumping the reducing agent through the device supply line in the opposite direction than in step (a); and
closing a circulation valve to prevent reducing agent from entering the circulation line from the inner tank volume.

13. The method of claim 12, wherein said device is in an open position during step (c) so that the purge gas enters the device supply line through the device.

14. The method of claim 12, further comprising:
pumping the excess reducing agent through a return line and away from the device during step (b), the return line being located at least partly outside the storage tank;
placing said device into a closed position and opening a vent valve to allow the purge gas to flow into and through the return line during step (c).

15. The method of claim 11 wherein step (c) comprises opening a vent valve and pumping the purge gas through the device supply line in the same direction as the reducing agent flows in step (a).
